Europäisches Patentamt

European Patent Office

Office européen des brevets

(11) Numéro de publication: **0 081 861**
**B1**

(12) **FASCICULE DE BREVET EUROPEEN**

(45) Date de publication du fascicule du brevet: **19.09.84**

(21) Numéro de dépôt: **82200233.3**

(22) Date de dépôt: **26.02.82**

(51) Int. Cl.³: **C 04 B 7/52,** C 04 B 7/35, C 04 B 13/04, C 04 B 13/24

(54) **Procédé de fabrication de ciment et ciment obtenu par ce procédé.**

(30) Priorité: **10.12.81 BE 206801**

(43) Date de publication de la demande:
**22.06.83 Bulletin 83/25**

(45) Mention de la délivrance du brevet:
**19.09.84 Bulletin 84/38**

(84) Etats contractants désignés:
**DE FR GB IT LU NL**

(56) Documents cités:
**AT-B- 330 062**
**US-A-1 728 496**

(73) Titulaire: **S.A. CIMENTERIES C.B.R. CEMENTBEDRIJVEN N.V. Chaussée de la Hulpe, 185 B-1170 Watermael-Boitsfort (BE)**

(72) Inventeur: **Pairon, Guy Sylvain 11, rue Guy Verachtert B-1160 Auderghem (BE)**

(74) Mandataire: **Thirion, Robert et al Bureau GEVERS S.A. 7, rue de Livourne Bte 1 B-1050 Bruxelles (BE)**

Courier Press, Leamington Spa, England.

## Description

La présente invention a pour objet un procédé de fabrication de ciment destiné à la préparation d'un coulis d'injection de gaine de béton précontraint.

Pour préparer des coulis d'injection de gaines de béton précontraint, le procédé utilisé jusqu'à présent consiste à mélanger, sur chantier, le ciment, un adjuvant réducteur d'eau, un agent retardateur de prise et de l'eau.

Etant donné que de tels coulis doivent répondre à des critères très sévères, notamment en ce qui concerne la viscosité, le maintien de cette dernière en fonction des écarts de température, le temps de fin de prise, l'absence de ressuage, etc... on comprend que le procédé connu présente le grave inconvénient de laisser le soin du dosage des divers constituants du coulis à des ouvriers de chantier qui, d'une part, ne disposent pas de matériel nécessaire à l'obtention d'un dosage précis et, d'autre part, travaillent souvent dans des conditions telles que tout dosage précis est pratiquement impossible à réaliser. Ce procédé connu présente également l'inconvénient de nécessiter l'approvisionnement des chantiers en divers constituants et le stockage de ces derniers.

L'invention a pour but de remédier à ces inconvénients et de procurer un procédé de préparation d'un ciment, pour coulis d'injection de gaine de béton précontraint, prêt à l'emploi, auquel il suffit, sur chantier, d'ajouter l'eau nécessaire à l'obtention du coulis ce qui présente l'avantage d'éliminer définitivement toute erreur ou imprécision de dosage des constituants précités et d'éviter ainsi des malfaçons résultant de ces erreurs ou imprécisions de dosage.

A cet effet, le procédé suivant l'invention consiste à broyer simultanément, à une température inférieure à 90°C, du clinker portland, exempt d'ion corrosif pour l'acier, du gypse, un adjuvant réducteur d'eau, sous forme anhydre, et un agent retardateur de prise du ciment, également sous forme anhydre.

L'invention a également pour objet le ciment obtenu par le procédé susdit.

D'autres détails et particularités de l'invention ressortiront de la description dudit procédé donné ci-après à titre d'exemple non limitatif.

Pour obtenir un ciment prêt à l'emploi permettant, par simple addition d'eau, d'obtenir un coulis d'injection de gaine de béton précontraint de viscosité déterminée, avec maintien de cette viscosité pendant un temps déterminé quelle que soit la température du coulis entre 0 et 30°C, sans ressuage, avec un temps de fin de prise inférieur à 24 heures indépendant de la température, une résistance à la compression supérieure à 30 N/mm², une résistance à la flexion supérieure à 4 N/mm², une absorption d'eau par capillarité inférieure à 100 g/dm², un retrait inférieur à 2,8 mm/m et sans ions agressifs vis-à-vis de l'acier constituant les armatures, le procédé suivant l'invention consiste à broyer simultanément du clinder portland, du gypse, un adjuvant réducteur d'eau sous forme anhydre et un agent retardateur de prise sous forme anhydre. Suivant ce procédé, on maintient la température de broyage inférieure à 90°F afin d'éviter que le gypse ($CaSO_4 . 2H_2O$) soit transformé en hémihydrate ($CaSO_4 . 1/2H_2O$) générateur de fausse prise du coulis, c'est-à-dire raidissement ou perturbation de la rhéologie de la pâte ciment-eau. Le coulis étant destiné à en rober les armatures en acier des gaines de précontrainte, le clinker utilisé dans le mélange à broyer doit être exempt d'ions corrosifs, tels que $Cl^-$, c'est-à-dire que la teneur en ions corrosifs doit être inferieure à 0,05%. Bien que certains clinkers gris puissent convenir, il est de loin préférable d'utiliser, pour avoir une fiabilité absolue du ciment, du clinker portland blanc qui ne peut être obtenu, pour qu'il soit pur, qu'à l'aide de matières premières et de combustibles exempts d'ions corrosifs. La teneur du mélange précité en gypse, exprimée en $SO_3$, est supérieure à 3% en poids afin d'éviter qu'en présence de matière organique dans le ciment, il y ait hydratation trop rapide du $C_3A$ (Aluminate tricalcique). En effet, la présence de matière organique dans le ciment peut accélérer la consommation des ions $SO_4$ provenant du gypse et dissous dans l'eau. Si la teneur en gypse était trop faible, c'est-à-dire $SO_3 < 3\%$, il y aurait un déséquilibre entre la vitesse de consommation des ions $SO_4^{--}$ et la vitesse de mise en solution de ces ions. En d'autres termes, il y aurait un manque d'ions $SO_4^{--}$ disponible dans le milieu aqueux et une hydratation du $C_3A$, ce qui entraînerait la perturbation de la rhéologie du mélange ciment-eau et provoquerait une perte d'ouvrabilité du coulis d'injection. Comme adjuvant réducteur d'eau présent dans le mélange susdit, on peut utiliser de la mélamine formaldéhyde et, comme agent retardateur de prise, on peut utiliser le glucono-delta-lactone. Ces deux additifs doivent impérativement être incorporés au mélange sous forme anhydre étant donné que le broyage s'effectue à une température inférieure à 90°C et qu'à une telle température, il est exclu d'introduire dans le broyeur une quantité d'eau, même minime, qui ne pourrait pas se transformer en vapeur qui serait évacuée par l'air chaud. Les teneurs du mélange en mélamine formaldéhyde et en glucono-delta-lactone sont respectivement comprises entre 0,1 et 1% et entre 0,01 à 0,1% en masse.

Il doit être entendu que l'invention n'est nullement limitée au procédé décrit.

## Revendications

1. Procédé de fabrication de ciment destiné à la préparation d'un coulis d'injection de gaine de béton précontraint, caractérisé en ce qu'il consiste à broyer simultanément, à une température inférieure à 90°C, du clinker portland, exempt d'ions corrosifs pour l'acier, du gypse, un adjuvant réducteur d'eau, sous forme anhydre, et un agent retardateur de prise du ciment, également sous forme anhydre.

2. Procédé suivant la revendication 1, caractérisé en ce que le clinker utilisé est un clinker portland blanc dont la teneur en ions corrosifs, tels que $Cl^-$, est inférieure à 0,05%.

3. Procédé suivant l'une ou l'autre des revendications 1 et 2, caractérisé en ce que la teneur en gypse du mélange, exprimée en $SO_3$, est supérieure à 3% en masse.

4. Procédé suivant l'une quelconque des revendications 1 à 3, caractérisé en ce que l'adjuvant réducteur d'eau précité est de la mélamine formaldéhyde, la teneur du mélange en adjuvant réducteur étant de 0,1 à 1% en masse.

5. Procédé suivant l'une quelconque des revendications 1 à 4, caractérisé en ce que l'agent retardateur de prise susdit est du glucono-delta-lactone, la teneur du mélange en agent retardateur étant de 0,01% à 0,1% en masse.

6. Ciment obtenu par le procédé suivant l'une quelconque des revendications 1 à 5.

## Patentansprüche

1. Verfahren zur Herstellung von Zement, der sich zur Erzeugung eines Mörtels zur Injektion in die Verschalung von Spannbeton eignet, dadurch gekennzeichnet, dass bei einer Temperatur unterhalb 90°C gleichzeitig Portland-Klinker, der frei von Stahl korrodierenden Ionen ist, Gips, ein den Wassergehalt reduzierender Zusatz in Gestalt eines Anhydrids und ein das Abbinden des Zements verzögerndes Mittel ebenfalls in Form eines Anhydrids zerkleinert wird.

2. Verfahren nach Anspruch 1, dadurch gekennzeichnet, dass der verwendete Klinker ein weisser Portland-Klinker ist, dessen Gehalt an korrosiven Ionen, wie zum Beispiel $Cl^-$, kleiner als 0,05% ist.

3. Verfahren nach einem der Ansprüche 1 und 2, dadurch gekennzeichnet, dass der Gehalt an Gips in der Mischung, ausgedrückt in $SO_3$, über 3 Gew.% liegt.

4. Verfahren nach einem der Ansprüche 1 bis 3, dadurch gekennzeichnet, dass der den Wassergehalt reduzierende Zusatz Melaminformaldehyd enthält, und dass der Gehalt des reduzierenden Zusatzen in der Mischung zwischen 0,1 und 1 Gew.% liegt.

5. Verfahren nach einem der Ansprüche 1 bis 4, dadurch gekennzeichnet, dass das Mittel zum Verzögern des Abbindens des Zements Glucono-Delta-Lacton enthält, und dass der Gehalt dieses Mittels in der Mischung zwischen 0,01 und 0,1 Gew.% liegt.

6. Zement hergestellt nach dem Verfahren gemäss einem der Ansprüche 1 bis 5.

## Claims

1. Process for producing cement adapted for use in preparing an injection grout for prestressed concrete sheathes, characterized in that it comprises grinding together, at a temperature lower than 90°C, Portland clinker, which is free from any corrosive ions for steel, gypsum, an anhydrous water reducing additive and also an anhydrous cement set retarding agent.

2. Process according to the claim 1, characterized in that the used clinker is a white Portland clinker the corrosive ion content of which, such as $Cl^-$, is lower than 0,05%.

3. Process according to either one of claims 1 and 2, characterized in that the gypsum content of the mixture, expressed as $SO_3$, is higher than 3% by weight.

4. Process according to any one of claims 1 to 3, characterized in that the said water reducing additive is melamine-formaldehyde, the reducing additive content of the mixture being 0,1 to 1% by weight.

5. Process according to any one of claims 1 to 4, characterized in that the said set retarding agent is glucono-deltalactone, the retarding agent content of the mixture being 0,01 to 0,1% by weight.

6. Cement as obtained with the process according to any one of claims 1 to 5.